(19) **Europäisches Patentamt / European Patent Office / Office européen des brevets**

(11) **EP 1 779 137 B1**

(12) **FASCICULE DE BREVET EUROPEEN**

(45) Date de publication et mention
de la délivrance du brevet:
**07.09.2011 Bulletin 2011/36**

(21) Numéro de dépôt: **05717079.7**

(22) Date de dépôt: **16.03.2005**

(51) Int Cl.:
***G01S 17/58*** *(2006.01)*

(86) Numéro de dépôt international:
**PCT/EP2005/051217**

(87) Numéro de publication internationale:
**WO 2005/114251 (01.12.2005 Gazette 2005/48)**

(54) **DISPOSITIF OPTIQUE DE MESURE DE DECALAGE EN FREQUENCE PAR EFFET DOPPLER**

OPTISCHE EINRICHTUNG ZUR MESSUNG EINER DOPPLER-FREQUENZVERSCHIEBUNG

OPTICAL DEVICE FOR MEASURING A DOPPLER FREQUENCY SHIFT

(84) Etats contractants désignés:
**DE FR GB NL**

(30) Priorité: **04.05.2004 FR 0404759**

(43) Date de publication de la demande:
**02.05.2007 Bulletin 2007/18**

(73) Titulaire: **THALES**
**92200 Neuilly sur Seine (FR)**

(72) Inventeurs:
 • **BAILLON, Bertrand**
 **F-94117 ARCUEIL Cedex (FR)**
 • **SCHLOTTERBECK, Jean-Pierre**
 **F-94117 ARCUEIL Cedex (FR)**
 • **LACONDEMINE, Xavier**
 **F-94117 ARCUEIL Cedex (FR)**
 • **RENARD, Alain**
 **F-94117 ARCUEIL Cedex (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 1 043 632       EP-A- 1 308 732**
**FR-A- 2 818 752       US-A- 5 018 151**
**US-A1- 2003 151 732**

 • **KURIHARA NOBORU ET AL: "New optical technique for the generation of quadrature signals on laser Doppler velocimeter" NIPPON KIKAI GAKKAI RONBUNSHU, B; NIPPON KIKAI GAKKAI RONBUNSHU, B HEN/TRANSACTIONS OF THE JAPAN SOCIETY OF MECHANICAL ENGINEERS, PART B SEPTEMBER 2002, vol. 68, no. 673, septembre 2002 (2002-09), pages 2580-2585, XP002309460**

**Description**

L'invention est relative à un dispositif de mesure d'un décalage Doppler de type optique.

Dans des dispositifs comportant une source laser et une détection cohérente hétérodyne, il peut être nécessaire de déterminer une variation de fréquence (effet Doppler) se produisant sur une partie du trajet du faisceau laser et résultant d'un phénomène physique que l'on désire compenser ou mesurer. Ceci est en particulier le cas des Lidars servant à mesurer la vitesse et la direction du vent par rétrodiffusion du faisceau laser sur des aérosols portés par le vent. Cette variation de fréquence est généralement déterminée par mélange du signal reçu avec un signal généré par un oscillateur local et affecté d'un décalage de fréquence qui est produit par un modulateur de type électro-optique ou acousto-optique (MAO).

Des dispositifs de ce genre sont aussi utilisés pour mesurer les vitesses des aéronefs par rapport au milieu environnant. Le dispositif est appelé dans ce cas d'utilisation "anémomètre".

La demande de brevet FR-A-2 818 752 montre un tel anémomètre laser permettant de déterminer la vitesse relative entre l'anémomètre et le milieu environnant.

Dans un autre domaine, la demande de brevet européen EP-A-1 043 632 montre un dispositif holographique numérique comportant des moyens de génération de deux ondes cohérentes entre elles, une onde d'illumination d'un objet et une onde de référence connue, des moyens de détection de l'interférence entre les deux ondes.

Dans le cas des anémomètres laser, la distance de mesure définit le type de détection du décalage Doppler à mesurer et la puissance de la source lumineuse de l'anémomètre, ainsi, la détection peut être, soit une détection cohérente, soit une détection directe ou incohérente.

Dans le cas d'une détection cohérente hétérodyne le faisceau issu de la source de rayonnement lumineux (laser) est séparé en deux, une partie est mise en forme spatialement et envoyée dans la zone de mesure. Un modulateur acousto-optique décale la fréquence du faisceau de la voie de référence. On mélange ensuite le signal rétrodiffusé avec la référence décalée pour générer des interférences au niveau d'un détecteur.

Dans l'application d'anémomètre, un faisceau laser, généré par une source laser, est focalisé à une certaine distance de l'aéronef. Les aérosols, présents dans l'atmosphère, rétro-diffusent le faisceau incident produisant un décalage de sa fréquence à l'émission. La fréquence Doppler c'est-à-dire l'écart entre la fréquence des faisceaux de rétro-diffusion et le faisceau incident est détecté par un interféromètre pour déduire la vitesse de l'aéronef. On sait que la fréquence Doppler Fd a pour valeur :

$$Fd = 2v/\lambda$$

v étant la projection sur l'axe de visée du laser de la vitesse de l'aéronef par rapport au milieu ambiant (atmosphère) c'est-à-dire la référence par rapport à laquelle on souhaite mesurer la vitesse de déplacement de l'aéronef, λ étant la longueur d'onde du faisceau émis.

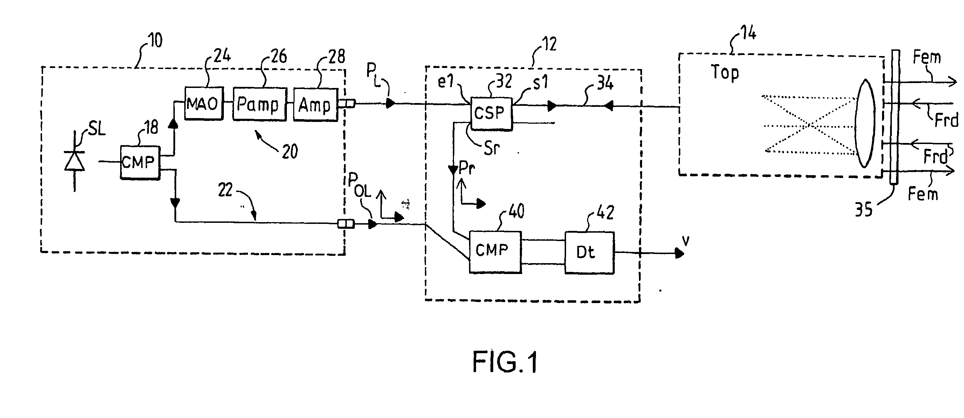

La figure 1 montre un synoptique d'un dispositif de mesure de Doppler de type optique, de l'état de l'art, utilisant un dispositif de décalage de fréquence de type MAO.

Le dispositif de la figure 1 comporte notamment une unité laser 10, une unité de mélange et détection 12 et une tête optique 14, ces éléments 10, 12, 14 correspondant aux principales fonctions du dispositif de mesure.

L'unité laser 10 comporte une source laser SL et un coupleur à maintien de polarisation (CMP) 18 fournissant un premier signal optique pour attaquer une voie de signal 20 et un second signal optique pour attaquer une voie de référence 22.

La voie de signal attaquée par le premier signal optique comporte un modulateur acousto-optique fibré (MAO) 24 produisant un décalage de fréquence du signal optique. Le signal en sortie du MAO est pré-amplifié puis amplifiée respectivement par un préamplificateur optique (Pamp) 26 et un amplificateur optique (Amp) 28 fournissant un signal optique de puissance pour être émis dans le milieu de référence.

Le signal de puissance en sortie de la voie de signal 20 attaque, à travers un coupleur de séparation de polarisation (CSP) 32 et une liaison optique bidirectionnelle 34 de l'unité de mélange-détection 12, la tête optique 14 rayonnant un faisceau laser Fem dans le milieu de référence.

La tête optique 14 assure, d'une part, la focalisation du rayon laser émis Fem dans le milieu de référence et, d'autre part, capte les rayons rétro-diffusés Frd par le milieu dans une direction déterminée.

Les rayons rétro-diffusés Frd captés par la tête optique, comportant éventuellement un décalage Doppler, sont envoyés par la liaison optique bidirectionnelle 34 vers le coupleur à séparation de polarisation 32 qui fournit, du fait de la rotation de polarisation du signal rétro-diffusé par rapport au signal émis grâce à une lame optique λ/4 35, à une sortie de retour de signal Sr, un signal optique de rétro-diffusion Pr.

L'unité de mélange détection 12 comporte, en outre, un coupleur à maintien de polarisation (CMP) 40 recevant, à une de ses entrées, le signal de référence Pol en sortie de la voie de référence de l'unité laser 10 et, à une autre entrée, le signal rétro-diffusé Pr. Le coupleur CMP 40 effectue le mélange des deux signaux optiques décalés en fréquence appliqués à ses deux entrées générant des interférences appliquées à un détecteur Dt 42.

Un traitement de signal appliqué au détecteur permet alors l'extraction du décalage Doppler, la mesure de la vitesse v de déplacement ainsi que le sens du déplacement.

La détection de l'effet Doppler, dans cette structure de la figure 1, est cohérente, de type hétérodyne (décalage en fréquence par le MAO).

Dans ce type de structure de mesure d'un effet Doppler, l'utilisation d'un modulateur acousto-optique MAO pour décaler la fréquence du faisceau de la voie de référence comporte l'inconvénient d'engendrer des raies harmoniques susceptibles de gêner le traitement du signal et, par conséquent, des signaux parasites limitant la précision et la fenêtre de mesure spectrale.

Afin de pallier les inconvénients des structures de mesure de l'état de l'art, l'invention propose un dispositif de mesure de décalage de fréquence par effet Doppler comportant :

- une voie de signal optique fournissant un faisceau lumineux de signal éclairant un milieu de référence ;
- une voie de référence fournissant un faisceau lumineux de référence pour la détection du décalage de fréquence par l'effet Doppler, le décalage en fréquence étant déterminé par l'écart de fréquence entre le signal lumineux éclairant le milieu de référence et le faisceau lumineux renvoyé par le milieu de référencé,
- au moins deux sources de rayonnement lumineux décalées en longueur d'onde, de préférence des lasers, une source de rayonnement lumineux générant le faisceau lumineux de la voie de signal et une autre source générant le faisceau lumineux de la voie de référence,

caractérisé en ce que les deux sources laser décalées en longueur d'onde de $\Delta\lambda$ sont réalisées sur un même substrat d'intégration ou sur un même « wafer ».

Un premier objectif de cette invention est d'améliorer la précision de mesure du Doppler optique par la suppression du dispositif actif de décalage en fréquence utilisé dans les structures de l'état de l'art.

D'autres objectifs sont la simplification et la baisse du coût de fabrication du dispositif de mesure.

Il est aussi un autre objectif de cette invention de mettre à profit la technologie des microlaser sur galette de semi-conducteur (ou wafer en langue anglaise) substrat verre, silicium, Inp, etc.....

En effet, les microlasers intégrés sur des wafer communs sont très stables en température et en vibration. De même, ils ont la propriété de se comporter de la même manière (support et pompage commun). Leur très forte cohérence (largeur typique de 8KHz) offre la possibilité de les faire battre entre eux. Les deux lasers (ou plus) seront choisis pour générer les faisceaux lumineux dans les voies du dispositif de mesure selon l'invention, par la proximité de leur longueur d'onde, l'écart de fréquence de ces types de lasers pouvant être compris entre 100MHz et 10GHz.

Dans une première structure comportant les deux sources laser, le dispositif de mesure selon l'invention comporte un coupleur optique ayant deux entrées de couplage optique et au moins une sortie optique connectée à une entrée d'un détecteur optique, les détecteurs optiques fournissant à partir du faisceau lumineux renvoyé par le milieu de référence et le faisceau lumineux de la voie de référence appliqués aux respectives entrées du coupleur optique, un signal de battement Bs correspondant à l'écart de fréquence entre les deux faisceaux lumineux appliqués aux entrées du coupleur optique comportant éventuellement le décalage Doppler.

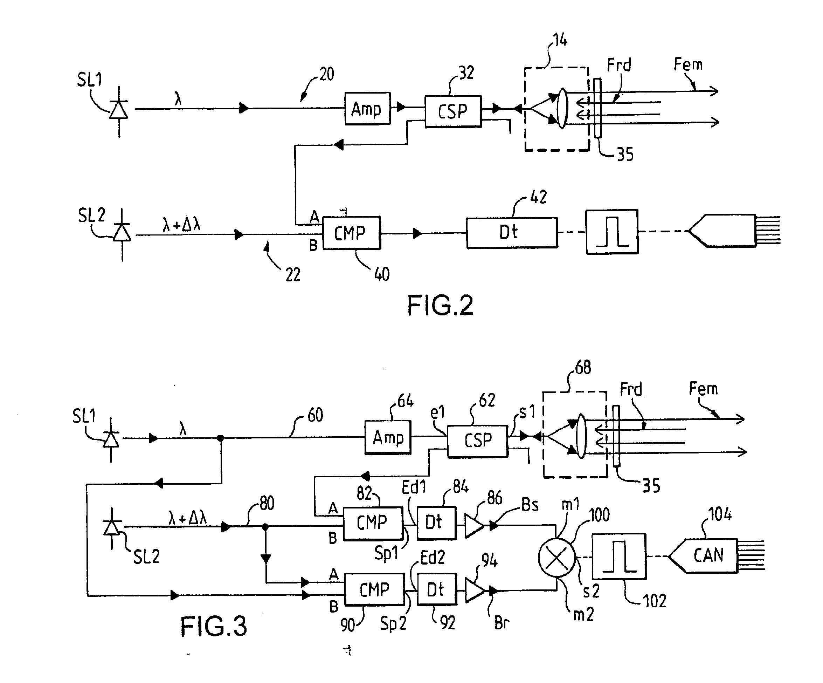

La figure 2 représente un dispositif de mesure, selon l'invention, comportant deux sources laser, une première source laser SL1 pour générer le signal optique de la voie de signal 20 et une autre source laser pour générer le signal optique de la voie de référence 22, la détection de l'effet Doppler pouvant être effectuée, soit de la même façon que dans la réalisation représentée à la figure 1, par une détection équilibrée, soit d'une autre façon, représentée à la figure 2, par une détection simple.

Dans une autre structure préférentielle, le dispositif de mesure selon l'invention comporte, en plus du coupleur optique et le détecteur optique de la première structure, un autre coupleur optique ayant une première A et une deuxième B entrée de couplage optique, une sortie optique de cet autre coupleur optique étant connectée à une entrée d'un autre détecteur optique, l'autre coupleur optique recevant à une des entrées de couplage A le signal optique généré par la deuxième source laser SL2 de la voie de référence et à l'autre entrée B le signal optique généré par la première source laser SL1 de la voie de signal, l'autre détecteur optique fournissant un signal de battement Br en fréquence entre les deux faisceaux lumineux générés par les deux sources laser.

Dans cette autre structure, les deux détecteurs fournissent des signaux de battement de même fréquence l'un des signaux de battement comportant éventuellement le décalage Doppler. L'écart en fréquence entre les deux sources du fait des dispersions des fréquences des lasers est ainsi annulé et une détection du décalage Doppler peut être ainsi réalisée plus aisément, soit par mélange des signaux en sortie des détecteurs (détection non cohérente) soit par mélange d'un signal en sortie d'un des détecteurs avec le signal en sortie de l'autre détecteur décalé en fréquence à l'aide d'un autre mélangeur.

L'invention sera mieux comprise par la description de différentes structures de dispositif de mesure du décalage Doppler selon l'invention. En référence aux dessins annexés dans lesquels :

- la figure 1, déjà décrite, montre un synoptique d'un dispositif de mesure, de l'état de l'art, d'un décalage Doppler de type optique ;
- la figure 2, déjà décrite, représente un dispositif de mesure, selon l'invention, comportant deux sources laser ;

- la figure 3, représente un synoptique du principe du dispositif de mesure selon l'invention ;
- la figure 4 représente une première réalisation du dispositif selon l'invention à partir du dispositif de la figure 3 ;
- la figure 5 représente une deuxième réalisation du dispositif selon l'invention à partir du dispositif de la figure 3 ;
- la figure 6 représente une troisième réalisation du dispositif selon l'invention à partir du dispositif de la figure 3.

La figure 3, représente un synoptique du principe du dispositif de mesure selon l'invention comportant deux sources laser.

Le dispositif de la figure 3 comporte essentiellement :

- une voie de signal 60 comportant un coupleur optique de séparation de polarisation CSP 62 ayant deux entrées, le coupleur CSP recevant à une première entrée e1, à travers un amplificateur optique Amp 64, un signal optique généré par une première source laser SL1, le coupleur optique 62 fournissant, à une sortie s1, un signal optique amplifié destiné à être rayonné à travers une tête optique 68 dans un milieu de référence ;
- une voie de référence 80 comportant un coupleur optique à maintien de polarisation CMP 82 ayant une première A et une deuxième B entrée de couplage optique et une sortie optique Sp1 connectée à une entrée Ed1 d'un détecteur optique Dt 84 suivi d'un amplificateur 86, le coupleur à maintien de polarisation 82 recevant à une des entrées de couplage B un signal optique généré par une deuxième source laser SL2 et à l'autre entrée A, à travers le coupleur de séparation de polarisation CSP 62 de la voie de signal 60, le signal optique rétro-diffusé Frd par le milieu comportant éventuellement le décalage Doppler, le détecteur optique 84 fournissant un signal de battement Bs correspondant à l'écart entre les fréquences des deux faisceaux lumineux appliqués aux entrées A, B du coupleur optique 82 comportant éventuellement le décalage Doppler.
- un autre coupleur optique à maintien de polarisation CMP 90 ayant une première A et une deuxième B entrée de couplage optique une sortie optique Sp2 connectée à une entrée Ed2 d'un autre détecteur optique 92 suivi d'un amplificateur 94, l'autre coupleur à maintien de polarisation 90 recevant à une des entrées de couplage A le signal optique généré par la deuxième source laser SL2 de la voie de référence et à l'autre entrée B le signal optique généré par la première source laser SL1 de la voie de signal, l'autre détecteur optique 92 fournissant un signal de battement Br en fréquence entre les deux faisceaux lumineux générés par les deux sources laser SL1 et SL2.

Dans le principe de réalisation du dispositif selon l'invention de la figure 3, les signaux de battement Br, Bs en sortie des respectifs détecteurs 84, 92 à travers les respectifs amplificateurs 86, 94, attaquent des respectives entrées m1 et m2 d'un mélangeur 100 fournissant, à une sortie s2, un signal analogique portant le décalage Doppler filtré par un filtre de bande 102 puis numérisé par un codeur analogique numérique CAN 104 pour l'extraction de l'information de décalage Doppler. Les fréquences de battement Br et Bs en sortie des détecteurs Dt 84, 92 sont, à l'éventuel décalage du Doppler près, identiques.

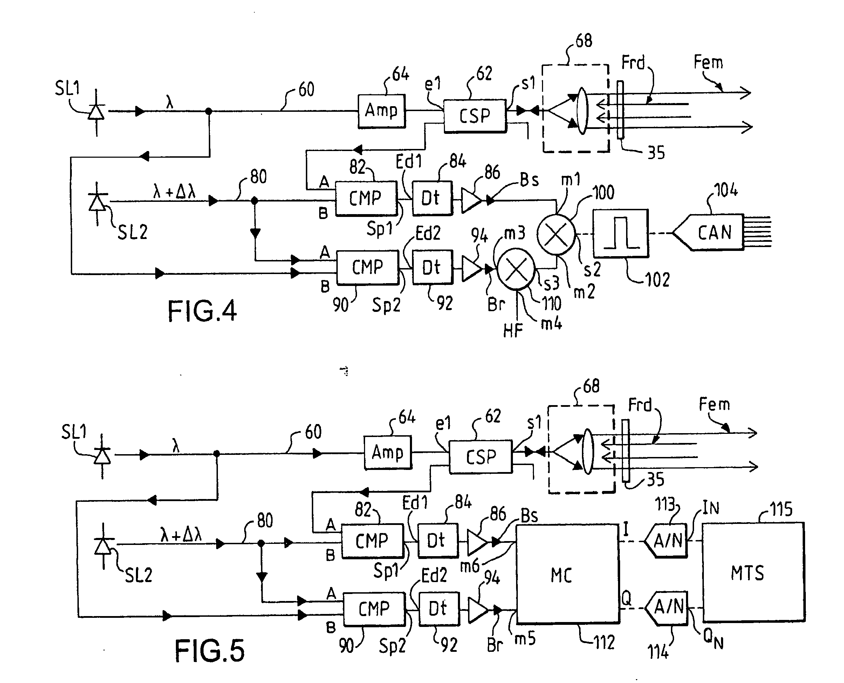

La figure 4 représente une première réalisation du dispositif selon l'invention à partir du dispositif de la figure 3. Dans cette première réalisation, la fréquence en sortie de l'autre détecteur 92 à travers l'amplificateur 94 est décalée d'un écart de fréquence HF. A cet effet, le dispositif de la figure 4 comporte un autre mélangeur de fréquence 110 attaqué, à une entrée de mélange m3, par le signal de battement Br en sortie de l'autre détecteur 92 à travers l'amplificateur 94 et à une autre entrée de mélange m4, par une fréquence de décalage HF, le mélangeur 110 fournissant par une sortie de mélange s3 un signal attaquant une des entrés m2 du mélangeur 100, l'autre entrée m1 du mélangeur 100 étant attaquée par le signal de battement Bs en sortie du détecteur 84 à travers l'amplificateur 86, le mélangeur 100 fournissant, à la sortie s2, un signal analogique décalé en fréquence HF portant le décalage Doppler filtré par le filtre de bande 102 puis numérisé par le codeur analogique numérique CAN 104 pour l'extraction de l'information de décalage Doppler.

Cette première réalisation préférentielle du dispositif de mesure donne le signe de la vitesse, (fréquences négatives) par exemple des aérosols, produisant l'effet Doppler.

La figure 5 représente une deuxième réalisation du dispositif selon l'invention à partir du dispositif de la figure 3. Dans cette deuxième réalisation, le dispositif comporte un mélangeur de fréquence complexe MC 112 attaqué, à une entrée de mélange m5, par le signal de battement Br en sortie de l'autre détecteur 92 à travers l'amplificateur 94 et à une autre entrée de mélange m6 par le signal de battement Bs en sortie du détecteur 84 à travers l'amplificateur 86, le mélangeur complexe MC 112 fournissant par deux sorties I et Q des signaux complexes codés en numérique par un respectif codeur analogique numérique CAN 113, 114. Des signaux numériques $I_N$ et $Q_N$ en sortie des respectifs codeurs CAN 113, 114 attaquent un module de traitement de signal MTS 115 en bande de base fournissant le décalage Doppler.

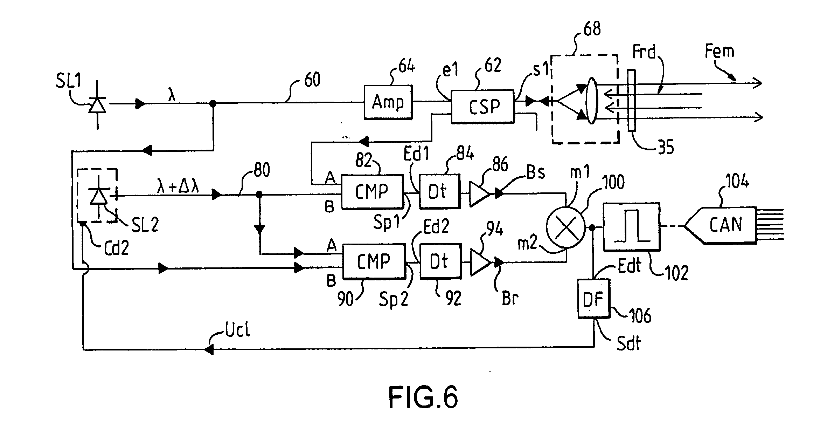

La figure 6 représente une troisième réalisation du dispositif selon l'invention à partir du dispositif de la figure 3. Dans cette troisième réalisation, la source laser SL2 de la voie de référence est ajustable en fréquence par une entrée électronique Cd2 de commande en fréquence. Comme dans le cas du dispositif de la figure 3, les signaux de battement Br, Bs en sortie des respectifs détecteurs 84, 92 à travers les respectifs amplificateurs 86, 94, attaquent des respectives entrées m1 et m2 du mélangeur 100 fournissant à sa sortie s2 un signal analogique portant le décalage Doppler filtré par un filtre de bande 102 puis numérisé par un codeur analogique numérique CAN 104 pour l'extraction de l'information de décalage Doppler. Dans cette troisième réalisation, le dispositif comporte, en outre, un détecteur de fréquence DF 106 attaqué à une entrée de détection Edt par le signal en sortie s2 du mélangeur 100 et fournissant à une sortie du détecteur Sdt un signal de contrôle Ucl attaquant l'entrée de contrôle Cd2 de fréquence de la source laser SL2.

Par le contrôle de la fréquence d'une des deux sources laser, dans ce cas SL2, on peut obtenir un écart entre les fréquences des deux lasers sensiblement constant. Un avantage du contrôle en fréquence du laser est de fournir des battements en fréquence Br et Bs en sortie des détecteurs sensiblement identiques lors de la fabrication (dispersions), mais aussi dans le temps, ce qui permet de faire travailler les détecteurs et les mélangeurs dans leurs plages de fonctionnement en fréquences optimum.

Dans d'autres réalisations, plusieurs sources laser sont fabriquées sur un même water pour pouvoir choisir parmi ces sources celles qui fournissent des fréquences proches donnant des battements proches de ceux souhaités.

Un des principaux avantages de cette invention est de supprimer le modulateur opto-acoustique MAO des dispositifs de mesure de l'effet Doppler optique. En effet, le MAO, outre son coût élevé, présente une consommation électrique élevé ce qui représente un inconvénient important dans le cas d'utilisation dans les aéronefs. En outre, comme cela à été dit précédemment, le MAO génère des harmoniques nuisant à la précision de mesure du Doppler.

**Revendications**

1. Dispositif de mesure de décalage de fréquence par effet Doppler comportant :

- une voie de signal optique (20, 60) fournissant un faisceau lumineux de signal éclairant un milieu de référence ;
- une voie de référence (22, 80) fournissant un faisceau lumineux de référence pour la détection du décalage de fréquence par l'effet Doppler, le décalage en fréquence étant déterminé par l'écart de fréquence entre le signal lumineux éclairant le milieu de référence et le faisceau lumineux renvoyé par le milieu de référence,
- au moins deux sources de rayonnement lumineux (SL1, SL2) décalées en longueur d'onde, de préférence des lasers, une source de rayonnement lumineux générant le faisceau lumineux de la voie de signal et une autre source générant le faisceau lumineux de la voie de référence,

**caractérisé en ce que** les deux sources laser (SL1, SL2) décalées en longueur d'onde de $\Delta\lambda$ sont réalisées sur un même substrat d'intégration ou sur un même « wafer ».

2. Dispositif de mesure selon la revendication 1, **caractérisé en ce qu'**il comporte un coupleur optique (82) ayant deux entrées de couplage optique et au moins une sortie optique connectée à un détecteur optique Dt (84), les détecteurs optiques fournissant à partir du faisceau lumineux renvoyé par le milieu de référence et le faisceau lumineux de la voie de référence appliqués aux respectives entrées du coupleur optique, un signal de battement Bs correspondant à l'écart de fréquence entre les deux faisceaux lumineux appliqués aux entrées du coupleur optique comportant éventuellement le décalage Doppler.

3. Dispositif de mesure selon la revendication 1, **caractérisé en ce qu'**il comporte, en plus du coupleur optique (82) et le détecteur optique Dt (84), un autre coupleur optique (90) ayant une première A et une deuxième B entrée de couplage optique, une sortie optique (Sp2) de cet autre coupleur optique étant connectée à une entrée (Ed2) d'un autre détecteur optique Dt (92), l'autre coupleur optique recevant à une des entrées de couplage A le signal optique généré par la deuxième source laser (SL2) de la voie de référence et à l'autre entrée B le signal optique généré par la première source laser (SL1) de la voie de signal, l'autre détecteur optique fournissant un signal de battement Br en fréquence entre les deux faisceaux lumineux générés par les deux sources laser.

4. Dispositif de mesure selon l'une des revendications 1 à 3, **caractérisé en ce qu'**il comporte :

- une voie de signal (60) comportant un coupleur optique de séparation de polarisation CSP (62) ayant deux entrées, les coupleurs recevant à une première entrée e1, à travers un amplificateur optique Amp (64), un signal optique généré par une première source laser (SL1), le coupleur optique (62) fournissant à une sortie s1 un signal optique amplifié destiné à être rayonné à travers une tête optique (68) dans un milieu de référence ;
- une voie de référence (80) comportant un coupleur optique à maintien de polarisation CMP (82) ayant une première A et une deuxième B entrée de couplage optique et une sortie optique Sp1 connectée à une entrée Ed1 d'un détecteur optique Dt (84) suivi d'un amplificateur (86), le coupleur à maintien de polarisation (82) recevant à une des entrées de couplage B un signal optique généré par une deuxième source laser (SL2) et à l'autre entrée A, à travers le coupleur de séparation de polarisation CSP 62 de la voie de signal (60), le signal optique retro-diffusé Frd par le milieu comportant éventuellement le décalage Doppler, le détecteur optique (84) fournissant un signal de battement Bs correspondant à l'écart entre les fréquences des deux faisceaux lumineux appliqués aux entrées A, B du coupleur optique (82) comportant éventuellement le décalage Doppler.
- un autre coupleur optique à maintien de polarisation CMP (90) ayant une première A et une deuxième B entré de couplage optique une sortie optique Sp2 connectée à une entrée Ed2 d'un autre détecteur optique (92) suivi d'un amplificateur (94), l'autre coupleur à maintien de polarisation (90) recevant à une des entrées de couplage A le signal optique généré par la deuxième source laser SL2 de la voie de référence et à l'autre entrée B le signal optique généré par la première source laser (SL1) de la voie de signal, l'autre détecteur optique (92) fournissant un signal de battement Br en fréquence entre les deux faisceaux lumineux générés par les deux sources laser(SL1, SL2).

5. Dispositif de mesure selon la revendication 4, **caractérisé en ce qu'**il comporte un mélangeur (100) attaqué par des respectives entrées m1 et m2 par les signaux de battement Br, Bs en sortie des respectifs détecteurs (84, 92) à travers les respectifs amplificateurs (86, 94), le mélangeur fournissant, à une sortie s2, un signal analogique portant le décalage Doppler.

6. Dispositif de mesure selon la revendication 5, **caractérisé en ce qu'**il comporte un autre mélangeur de fréquence (110) attaqué, à une entrée de mélange m3, par le signal de battement Br en sortie de l'autre détecteur (92) à travers l'amplificateur (94) et à une autre entrée de mélange m4, par une fréquence de décalage HF, le mélangeur (110) fournissant par une sortie de mélange s3 un signal attaquant une des entrés m2 du mélangeur (100), l'autre entrée m1 du mélangeur (100) étant attaquée par le signal de battement Bs en sortie du détecteur (84) à travers l'amplificateur (86), le mélangeur (100) fournissant, à la sortie s2, un signal analogique décalé en fréquence HF portant le décalage Doppler.

7. Dispositif de mesure selon l'une des revendications 4 à 6, **caractérisé en ce que** le signal analogique portant le décalage Doppler est filtré par un filtre de bande (102) puis numérisé par un codeur analogique numérique CAN (104) pour l'extraction de l'information de décalage Doppler

8. Dispositif de mesure selon la revendication 4, **caractérisé en ce qu'**il comporte un mélangeur de fréquence complexe MC (112) attaqué, à une entrée de mélange m5, par le signal de battement Br en sortie de l'autre détecteur (92) à travers l'amplificateur (94) et à une autre entrée de mélange m6 par le signal de battement Bs en sortie du détecteur 84 à travers l'amplificateur 86, le mélangeur complexe MC (112) fournissant par deux sorties I et Q des signaux complexes codés en numérique par un respectifs codeur analogique numérique CAN (113, 114), des signaux numériques $I_N$ et $Q_N$ en sortie des respectifs codeurs CAN (113, 114) attaquant un module de traitement de signal MTS (115) en bande de base fournissant le décalage Doppler.

9. Dispositif de mesure selon la revendication 4, **caractérisé en ce que** la source laser SL2 de la voie de référence est ajustable en fréquence par une entrée électronique Cd2 de commande en fréquence, les signaux de battement Br, Bs en sortie des respectifs détecteurs (84, 92) à travers les respectifs amplificateurs (86, 94), attaquent des respectives entrées m1 et m2 du mélangeur (100) fournissant à sa sortie s2 un signal analogique portant le décalage Doppler filtré par un filtre de bande (102) puis numérisé par un codeur analogique numérique CAN 104 pour l'extraction de l'information de décalage Doppler, le dispositif comportant, en outre, un détecteur de fréquence DF (106) attaqué à une entrée de détection Edt par le signal en sortie s2 du mélangeur (100) et fournissant à une sortie du détecteur Sdt un signal de contrôle Ucl attaquant l'entrée de contrôle Cd2 de fréquence de la source laser SL2.

10. Dispositif de mesure selon l'une des revendications 1 à 9, **caractérisé en ce que** plusieurs sources laser sont fabriquées sur un même wafer pour pouvoir choisir parmi ces sources celles (SL1, SL2) qui fournissent des fréquences proches donnant des battements proches de ceux souhaités.

**Claims**

1. A device for measuring a Doppler effect frequency shift, comprising:

   - an optical signal channel (20, 60) delivering a signal light beam illuminating a reference medium;
   - a reference channel (22, 80) delivering a reference light beam for detecting the Doppler effect frequency shift, said frequency shift being determined from the difference in frequency between the light signal illuminating the reference medium and the light beam returned by the reference medium;

- at least two wavelength shifted light radiation sources (SL1, SL2), preferably lasers, a light radiation source generating the light beam of the signal channel and another source generating the light beam of the reference channel;

**characterised in that** the two laser sources (SL1, SL2) wavelength shifted by $\Delta\lambda$ are produced on the same integration substrate or on the same "wafer".

2. The measuring device according to claim 1, **characterised in that** it comprises an optical coupler (82) having two optical coupling inputs and at least one optical output connected to an optical detector Dt (84), the optical detectors delivering from the light beam returned by the reference medium and the light beam of the reference channel, which are applied to the respective inputs of the optical coupler, a beat signal Bs corresponding to the difference in frequency between the two light beams applied to the inputs of the optical coupler that may have the Doppler shift.

3. The measuring device according to claim 1, **characterised in that** it comprises, in addition to the optical coupler (82) and the optical detector Dt (84), another optical coupler (90) having a first A and a second B optical coupling input, an optical output (Sp2) of said other optical coupler being connected to an input (Ed2) of another optical detector Dt (92), said other optical coupler receiving at one of the coupling inputs A the optical signal generated by the second laser source (SL2) of the reference channel and at said other input B the optical signal generated by the first laser source (SL1) of the signal channel, said other optical detector delivering a beat signal Br of a frequency between the two light beams generated by the two laser sources.

4. The measuring device according to any one of claims 1 to 3, **characterised in that** it comprises:

- a signal channel (60) comprising an optical polarisation-splitting coupler CSP (62) having two inputs, the couplers receiving at a first input e1, through an optical amplifier Amp (64), an optical signal generated by a first laser source (SL1), said optical coupler (62) delivering to an output s1 an amplified optical signal to be radiated through an optical head (68) in a reference medium;

- a reference channel (80) comprising an optical polarisation-retaining coupler CMP (82) having a first A and a second B optical coupling input and an optical output Sp1 connected to an input Ed1 of an optical detector Dt (84) followed by an amplifier (86), said polarisation-retaining coupler (82) receiving at one of the coupling inputs B an optical signal generated by a second laser source (SL2) and at the other input A, through the polarisation-splitting coupler CSP (62) of the signal channel (60), the optical signal Frd scattered by the medium that may have the Doppler shift, the optical detector (84) delivering a beat signal Bs corresponding to the difference in frequency between the two light beams applied to the inputs A, B of the optical coupler (82) that may have the Doppler shift;

- another optical polarisation-retaining coupler CMP (90) having a first A and a second B optical coupling input, an optical output Sp2 connected to an input Ed2 of another optical detector (92) followed by an amplifier (94), said other polarisation-retaining coupler (90) receiving at one of the coupling inputs A the optical signal generated by the second laser source SL2 of the reference channel and at the other input B the optical signal generated by the first laser source (SL1) of the signal channel, said other optical detector (92) delivering a beat signal Br of a frequency between the two light beams generated by the two laser sources (SL1, SL2).

5. The measuring device according to claim 4, **characterised in that** it comprises a mixer (100) fed via the respective inputs m1 and m2 by the beat signals Br, Bs output from the respective detectors (84, 92) through the respective amplifiers (86, 94), said mixer delivering, at an output s2, an analogue signal carrying the Doppler shift.

6. The measuring device according to claim 5, **characterised in that** it comprises another frequency mixer (110) fed, at a mixing input m3, by the beat signal Br output from the other detector (92) through the amplifier (94) and, at another mixing input m4, by a shift frequency HF, said mixer (110) delivering via a mixing output s3 a signal feeding one of the inputs m2 of the mixer (100), the other input m1 of the mixer (100) being fed by the beat signal Bs output from the detector (84) through the amplifier (86), said mixer (100) delivering, at the output s2, a frequency shifted analogue signal HF carrying the Doppler shift.

7. The measuring device according to any one of claims 4 to 6, **characterised in that** the analogue signal carrying the Doppler shift is filtered by a band-pass filter (102) and is then digitised by an analogue-digital encoder CAN (104) for extracting the Doppler shift information.

8. The measuring device according to claim 4, **characterised in that** it comprises a complex frequency mixer MC (112) fed, at a mixing input m5, by the beat signal Br output from the other detector (92) through the amplifier (94) and, at another mixing input m6, by the beat signal Bs output from the detector (84) through the amplifier (86), said complex mixer MC (112) delivering, via two outputs I and Q, complex signals digitally encoded by a respective digital-analogue encoder CAN (113, 114), the digital signals IN and $Q_N$ output from the respective encoders CAN (113, 114) feeding a base band signal processing module MTS (115) delivering the Doppler shift.

9. The measuring device according to claim 4, **characterised in that** the frequency of the laser source SL2 of the reference channel can be adjusted by an electronic frequency control input Cd2, the beat signals Br, Bs output from the respective detectors (84, 92) through the respective amplifiers (86, 94) feeding the respective inputs m1 and m2 of the mixer (100) delivering to its output s2 an analogue signal carrying the Doppler shift, that is filtered by a band-pass filter (102) and then digitised by an analogue-digital encoder CAN (104) for extracting the Doppler shift information, said device further comprising a frequency detector DF (106) fed to a detection input Edt by the signal output s2 from the mixer (100) and delivering to an output of the detector Sdt a control signal Ucl feeding the input Cd2 for controlling the frequency of the laser source SL2.

10. The measuring device according to any one of claims 1 to 9, **characterised in that** several laser sources are produced on the same wafer, so that from these sources those (SL1, SL2) can be selected that deliver frequencies near to those that deliver beats that are near to the desired beats.

**Patentansprüche**

1. Vorrichtung zum Messen einer Doppler-Effekt-Frequenzverschiebung, die Folgendes umfasst:

   - einen optischen Signalkanal (20, 60) der einen Signallichtstrahl liefert, der ein Referenzmedium beleuchtet;
   - einen Referenzkanal (22, 80) der einen Referenzlichtstrahl liefert zum Erkennen der Doppler-Effekt-Frequenzverschiebung, wobei die Frequenzverschiebung anhand der Frequenzdifferenz zwischen dem das Referenzmedium beleuchtenden Lichtsignal und dem vom Referenzmedium zurückgesandten Lichtstrahl ermittelt wird;
   - wenigstens zwei wellenlängenverschobene Lichtstrahlungsquellen (SL1, SL2), vorzugsweise Laser, wobei eine Lichtstrahlungsquelle den Lichtstrahl des Signalkanals und eine andere Quelle den Lichtstrahl des Referenzkanals erzeugt;

**dadurch gekennzeichnet, dass** die beiden um Δλ wellenlängenverschobenen Laserquellen (SL1, SL) auf demselben Integrationssubstrat oder auf demselben "Wafer" erzeugt werden.

2. Messvorrichtung nach Anspruch 1, **dadurch gekennzeichnet, dass** sie einen Optokoppler (82) mit zwei optischen Kopplungseingängen und wenigstens einem optischen Ausgang umfasst, der mit einem optischen Detektor Dt (84) verbunden ist, wobei die optischen Detektoren von dem von dem Referenzmedium zurückgesandten Lichtstrahl und von dem Lichtstrahl des Referenzkanals, die an die jeweiligen Eingänge des Optokopplers angelegt sind, ein Schwebungssignal Bs liefern, das der Frequenzdifferenz zwischen den beiden an die Eingänge des Optokopplers angelegten Lichtstrahlen entspricht, wobei der Optokoppler eventuell die Doppler-Verschiebung aufweist.

3. Messvorrichtung nach Anspruch 1, **dadurch gekennzeichnet, dass** sie zusätzlich zu dem Optokoppler (82) und dem optischen Detektor Dt (84) einen weiteren Optokoppler (90) mit einem ersten A und einem zweiten B optischen Kopplungseingang umfasst, wobei ein optischer Ausgang (Sp2) dieses anderen Optokopplers mit einem Eingang (Ed2) eines anderen optischen Detektors Dt (92) verbunden ist, wobei der andere Optokoppler an einem der Kopplungseingänge A das von der zweiten Laserquelle (SL2) des Referenzkanals erzeugte optische Signal und am anderen Eingang B das von der ersten Laserquelle (SL1) des Signalkanals erzeugte optische Signal empfängt, wobei der andere optische Detektor ein Schwebungssignal Br mit einer Frequenz zwischen den von den beiden Laserquellen erzeugten Lichtquellen überträgt.

4. Messvorrichtung nach einem der Ansprüche 1 bis 3, **dadurch gekennzeichnet, dass** sie Folgendes umfasst:

   - einen Signalkanal (60), der einen Polarisationsteilungs-Optokoppler CSP (62) mit zwei Eingängen umfasst, wobei die Koppler an einem ersten Eingang e1, durch einen optischen Verstärker Amp (64), ein von einer ersten Laserquelle (SL1) erzeugtes optisches Signal empfangen, wobei der Optokoppler (62) ein verstärktes optisches Signal zu einem Ausgang s1 zum Strahlen durch einen optischen Kopf (68) in einem Referenzmedium liefert;
   - einen Referenzkanal (80), der einen Polarisationserhaltungs-Optokoppler CMP (82) mit einem ersten A und einem zweiten B optischen Kopplungseingang und einen optischen Ausgang Sp1 umfasst, der mit einem Eingang Ed1 eines optischen Detektors Dt (84) gefolgt von einem Verstärker (86) verbunden ist, wobei der Polarisationserhaltungskoppler (82) an einem der Kopplungseingänge B ein von einer zweiten Laserquelle (SL2) erzeugtes optisches Signal und am anderen Eingang A, durch den Polarisationsteilungskoppler CSP (62) des Signalkanals (60), das von dem Medium zurückgestreute optische Signal Frd empfängt, das eventuell die Doppler-Verschiebung aufweist, wobei der optische Detektor (84) ein Schwebungssignal Bs liefert, das der Frequenzdifferenz zwischen den beiden an die Eingänge A, B des Optokopplers (82) angelegten Lichtstrahlen entspricht, der eventuell die Doppler-Verschiebung aufweist;
- einen weiteren Polarisationserhaltungs-Optokoppler CMP (90) mit einem ersten A und einem zweiten B optischen Kopplungseingang, einem optischen Ausgang Sp2, der mit einem Eingang Ed2 eines anderen optischen Detektors (92) gefolgt von einem Verstärker (94) verbunden ist, wobei der andere Polarisationserhaltungskoppler (90) an einem der Kopplungseingänge A das von der zweiten Laserquelle SL2 des Referenzkanals erzeugte optische Signal und am anderen Eingang B das von der ersten Laserquelle (SL1) des Signalkanals erzeugte optische Signal empfängt, wobei der andere optische Detektor (92) ein Schwebungssignal Br mit einer Frequenz zwischen den beiden von den zwei Laserquellen (SL1, SL2) erzeugten Lichtstrahlen liefert.

5. Messvorrichtung nach Anspruch 4, **dadurch gekennzeichnet, dass** sie einen Mischer (100) umfasst, der über die jeweiligen Eingänge m1 und m2 mit den Schwebungssignalen Br, Bs gespeist wird, die von den jeweiligen Detektoren (84, 92) durch die jeweiligen Empfänger (86, 94) ausgegeben werden, wobei der Mischer an einen Ausgang s2 ein die Doppler-Verschiebung führendes Analogsignal anlegt.

6. Messvorrichtung nach Anspruch 5, **dadurch gekennzeichnet, dass** sie einen weiteren Frequenzmischer (110) umfasst, der an einem Mischeingang m3 mit dem Schwebungssignal Br, das von dem anderen Detektor (92) durch den Verstärker (94) ausgegeben wird, und an einem anderen Mischeingang m4 mit einer Verschiebungsfrequenz HF gespeist wird, wobei der Mischer (110) über einen Mischausgang s3 ein Signal liefert, das einen der Eingänge m2 des Mischers (100) speist, wobei der andere Eingang m1 des Mischers (100) mit dem Schwebungssignal Bs gespeist wird, das von dem Detektor (84) durch den Verstärker (86) ausgegeben wird, wobei der Mischer (100) an den Ausgang s2 ein frequenzverschobenes Analogsignal HF anlegt, das die Doppler-Verschiebung führt.

7. Messvorrichtung nach einem der Ansprüche 4 bis 6, **dadurch gekennzeichnet, dass** das die Doppler-Verschiebung führende Analogsignal von einem Bandfilter (102) gefiltert und dann von einem Analog-Digital-Codierer CAN (104) digitalisiert wird, um die Doppler-Verschiebungsinformationen zu extrahieren.

8. Messvorrichtung nach Anspruch 4, **dadurch gekennzeichnet, dass** sie einen komplexen Frequenzmischer MC (112) umfasst, der an einem Mischeingang m5 mit dem Schwebungssignal Br, das von dem anderen Detektor (92) durch den Verstärker (94) ausgegeben wird, und an einem anderen Mischeingang m6 mit dem Schwebungssignal Bs gespeist wird, das vom Detektor (84) durch den Verstärker (86) ausgegeben wird, wobei der komplexe Mischer MC (112) über zwei Ausgänge I und Q komplexe Signale liefert, die von einem jeweiligen Digital-Analog-Codierer CAN (113, 114) digital codiert werden, wobei die von den jeweiligen Codierern CAN (113, 114) ausgegebenen digitalen Signale IN und $Q_N$ ein Basisbandsignal-Verarbeitungsmodul MTS (115) speisen, das die Doppler-Verschiebung liefert.

9. Messvorrichtung nach Anspruch 4, **dadurch gekennzeichnet, dass** die Frequenz der Laserquelle SL2 des Referenzkanals durch einen elektronischen Frequenzregeleingang Cd2 justiert werden kann, wobei die von den jeweiligen Detektoren (84, 92) durch die jeweiligen Verstärker (86, 94) ausgegebenen Schwebungssignale Br, Bs die jeweiligen Eingänge m1 und m2 des Mischers (100) speisen, der an seinen Ausgang s2 ein Analogsignal anlegt, das die Doppler-Verschiebung führt, gefiltert durch einen Bandfilter (102) und dann digitalisiert durch einen Analog-Digital-Codierer CAN (104) zum Extrahieren der Doppler-Verschiebungsinformationen, wobei die Vorrichtung ferner einen Frequenzdetektor DF (106), der an einem Detektionseingang Edt mit dem vom Mischer (100) ausgegebenen Signal s2 gespeist wird, umfasst und an einen Ausgang des Detektors Sdt ein Steuersignal Ucl anlegt, das den Steuereingang Cd2 mit der Frequenz der Laserquelle SL2 speist.

10. Messvorrichtung nach einem der Ansprüche 1 bis 9, **dadurch gekennzeichnet, dass** mehrere Laserquellen auf demselben Wafer erzeugt werden, damit aus diesen Quellen diejenigen (SL1, SL2) ausgewählt werden können, die Frequenzen in der Nähe derjenigen erzeugen, die Schwebungen nahe an den gewünschten liefern.

FIG.1

EP 1 779 137 B1

FIG.2

FIG.3

FIG.4

FIG.5

FIG.6

EP 1 779 137 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2818752 A

- EP 1043632 A